# EUROPÄISCHE PATENTSCHRIFT

(11) **EP 3 147 084 B1**
(45) Veröffentlichungstag und Bekanntmachung des Hinweises auf die Patenterteilung: **21.03.2018**
(21) Anmeldenummer: 15187069.8
(22) Anmeldetag: 28.09.2015
(51) Int. Cl.: B25D 16/00, B25F 5/00, B25B 21/02, F16H 35/10

(54) **HANDWERKZEUGMASCHINE**
MANUAL MACHINE TOOL
MACHINE-OUTIL PORTATIVE

(43) Veröffentlichungstag der Anmeldung: 29.03.2017
(73) Patentinhaber: HILTI Aktiengesellschaft, 9494 Schaan (LI)
(72) Erfinder: Kaibach, Werner, 86916 Kaufering (DE)
(74) Vertreter: Hilti Aktiengesellschaft Corporate Intellectual Property

(56) Entgegenhaltungen:
- US-A- 5 690 577
- US-A1- 2002 037 785

## Beschreibung

### GEBIET DER ERFINDUNG

Die vorliegende Erfindung betrifft eine Handwerkzeugmaschine für rotierende Werkzeuge, z.B. einen Bohrhammer, einen Elektroschrauber.

Ein Bohrer oder ein anderes rotierendes Werkzeug kann in einem Werkstück verhaken. Der Anwender muss den Bohrer lösen, bevor die Anwendung fortgesetzt werden kann. EP 2522466 A2 beschreibt eine mechanische Lösung, das Verhaken durch ein Getriebe mit einem Wechselschlag zu lösen. US 5,690,577 A beschreibt eine Handwerkzeugmaschine mit den Merkmalen des Oberbegriffes von Anspruch 1.

### OFFENBARUNG DER ERFINDUNG

Die im Anspruch 1 beanspruchte, erfindungsgemäße Handwerkzeugmaschine hat einen Motor und einen Werkzeughalter zum Haltern eines drehenden Werkzeuges auf einer Arbeitsachse. Das Sonnenrad oder das Hohlrad der Planetengetriebestufe ist mit dem Motor gekoppelt. Der Planetenträger ist mit dem Werkzeughalter gekoppelt. Eine erste Sperrkörperkupplung koppelt das Sonnenrad mit dem Planetenträger. Eine zweite Sperrkörperkupplung koppelt das Hohlrad mit dem Planetenträger.

Bei einer übermäßigen Drehmomentbelastung, die z.B. bei einem blockierenden Bohrer auftritt, werden die beiden Sperrkörperkupplungen nacheinander geschlossen und geöffnet. Beim Schließen, d.h. wenn die Sperrkörperkupplung beginnt ein Drehmoment zu übertragen, erzeugen die Sperrkörperkupplungen jeweils einen Drehschlag oder Ruck. Die mit dem Sonnenrad gekoppelte Sperrkörperkupplung hat eine gegenläufige Drehrichtung zu der mit dem Hohlrad gekoppelten Sperrkörperkupplung, wodurch die nacheinanderfolgenden Drehschläge in entgegengesetzte Drehrichtungen erfolgen. Dies kann einen verhakten Bohrer lösen oder das Lösen zumindest unterstützen.

Während das eine von Sonnenrad und Hohlrad mit dem Motor gekoppelt ist, ist vorzugsweise das andere von Sonnenrad und Hohlrad frei drehbar. Das Andere ist vorzugsweise weder starr an dem Motor, die Planetengetriebestufe oder ein Maschinengehäuse angebunden. Die Drehrichtung des Anderen kann gegenläufig zu der Drehrichtung des Motors sein.

### Eine bevorzugte

Ausgestaltung sieht vor, dass die erste Sperrkörperkupplung eine axial auslösende Sperrkörperkupplung ist. Die verrastenden Sperrkörper sind längs einer Getriebeachse beweglich, um das Sonnenrad an den Planetenträger anzukoppeln und abzukoppeln. Eine weitere bevorzugte Ausgestaltung sieht vor, dass die zweite Sperrkörperkupplung eine axial auslösende Sperrkörperkupplung ist. Die verrastenden Sperrkörper sind längs einer Getriebeachse beweglich, um das Hohlrad an den Planetenträger anzukoppeln und abzukoppeln, alternativ kann die zweite Sperrkörperkupplung radial auslösend mit zu der Getriebeachse radial beweglichen Sperrkörpern ausgebildet sein.

### Eine bevorzugte

Ausgestaltung sieht vor, dass die erste Sperrkörperkupplung gegenüber der zweiten Sperrkörperkupplung derart um die Drehachse versetzt angeordnet ist, dass maximal eine der beiden Sperrkörperkupplung, in Eingriff ist. Vorzugsweise gelangen die beiden Sperrkörperkupplungen nicht gleichzeitig in Eingriff, wodurch sich deren Drehschläge auf den Planetenträger zumindest teilweise aufheben würden.

### Eine bevorzugte

Ausgestaltung sieht vor, dass die erste Sperrkörperkupplung eine erste Anzahl von Drehstellungen aufweist, in welchen die erste Sperrkörperkupplung in Eingriff ist, die zweite Sperrkörperkupplung eine zweite Anzahl von Drehstellungen aufweist, in welchen die zweite Sperrkörperkupplung in Eingriff ist, und das Verhältnis der ersten Anzahl zu der zweiten Anzahl gleich dem Verhältnis des äußeren Umfangs des Sonnenrads zu dem inneren Umfangs des Hohlrads ist. Das gewählte Verhältnis führt zu einem bevorzugten alternierendem Wechsel von genau einem Drehschlag der ersten Sperrkörperkupplung und genau einem Drehschlag der zweiten Sperrkörperkupplung.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: einen Bohrhammer
- Fig. 2: ein Getriebe im Längsschnitt in der Ebene II-II
- Fig. 3: das Getriebe im Querschnitt in der Ebene III-III

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

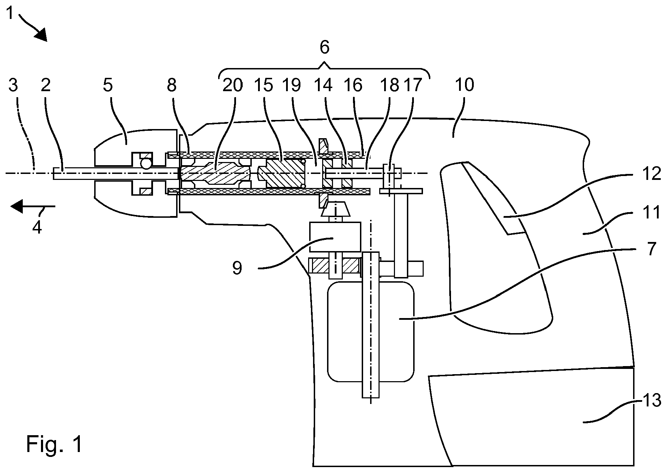

Fig. 1 zeigt einen Bohrhammer 1, der einen Bohrer 2 kontinuierlich um einer Arbeitsachse 3 drehend antreibt kann und währenddessen periodisch, längs der Arbeitsachse **3** in einer Schlagrichtung **4** Schläge auf den Bohrer **2** ausübt. Der Bohrer **2** ist in einen Werkzeughalter **5** eingesetzt und verriegelt. Der Bohrer **2** ist in dem Werkzeughalter **5** längs der Arbeitsachse **3** für mehrere Millimeter beweglich. Ein Schlagwerk **6** erzeugt die Schläge auf den beweglichen Bohrer **2.** Das Schlagwerk **6** kann beispielsweise ein pneumatisches Schlagwerk **6** oder ein Schlagwerk **6** mit einer mechanischen Feder und einer Rastplatte sein. Ein Elektromotor **7** treibt das Schlagwerk **6** an. Der Elektromotor **7** treibt auch eine Abtriebswelle **8** drehend an, auf welche der Werkzeughalter **5** aufgesetzt ist. Zwischen den Elektromotor **7** und die Abtriebswelle **8** ist ein Getriebe **9** geschaltet, welches unter anderem ein zu übertragendes Drehmoment begrenzt, um den Anwender und den Bohrhammer **1** vor übermäßiger Belastung zu schützen.

Der Bohrhammer **1** weist ein Maschinengehäuse **10** auf, in welchem der Elektromotor **7**, das Schlagwerk **6** und das Getriebe **9** angeordnet sind. Ein Handgriff **11** an dem Maschinengehäuse **10** ermöglicht es dem Anwender, den Bohrhammer **1** im Betrieb zu halten und zu führen. Der Bohrhammer **1**, d.h. der Elektromotor, kann über einen Systemschalter **12** eingeschaltet werden. Der Systemschalter **12** ist vorzugsweise an oder nahe dem Handgriff **11** angeordnet. Ein Batteriepaket **13** oder eine Netzleitung versorgt den Motor **7** mit Strom.

Fig. 1 zeigt ein beispielhaftes pneumatisches Schlagwerk **6.** Ein Erregerkolben **14** und ein Schläger **15** sind in einem Führungsrohr **16** in dem Schlagwerk **6** längs der Arbeitsachse **3** beweglich geführt. Der Erregerkolben **14** ist über einen Exzenter **17** an den Motor **7** angekoppelt und zu einer periodischen, linearen Bewegung gezwungen. Ein Pleuel **18** verbindet den Exzenter **17** mit dem Erregerkolben **14.** Eine Luftfeder gebildet durch eine pneumatische Kammer **19** zwischen dem Erregerkolben **14** und dem Schläger **15** koppelt eine Bewegung des Schlägers **15** an die Bewegung des Erregerkolbens **14** an. Der Schläger **15** kann direkt auf ein hinteres Ende des Bohrers **2** aufschlagen oder mittelbar über einen im Wesentlichen ruhenden Zwischenschläger **20** einen Teil seines Impuls auf den Bohrer **2** übertragen.

Das Getriebe **9** koppelt den Elektromotor **7** an die Abtriebswelle **8** an und überträgt das von dem Elektromotor **7** erzeugte Drehmoment. Das Getriebe **9** unterbricht bei einer Überlast die Übertragung des Drehmoments. Die Überlast ist zumeist von einem im Untergrund blockierenden Bohrer **2** verursacht. Das Getriebe **9** erzeugt bei der Überlast abwechselnd einen Schlag in der üblichen Drehrichtung des Bohrers **2** und einen Schlag entgegen der Drehrichtung aus. Die wechselnden Schläge können ein Lösen des Bohrers **2** und Überwinden eines blockierenden Hindernisses begünstigen. Das Getriebe **9** beendet die seine drehschlagende Wirkung, wenn das anliegende Drehmoment das maximal zu übertragendes Drehmoment unterschreitet.

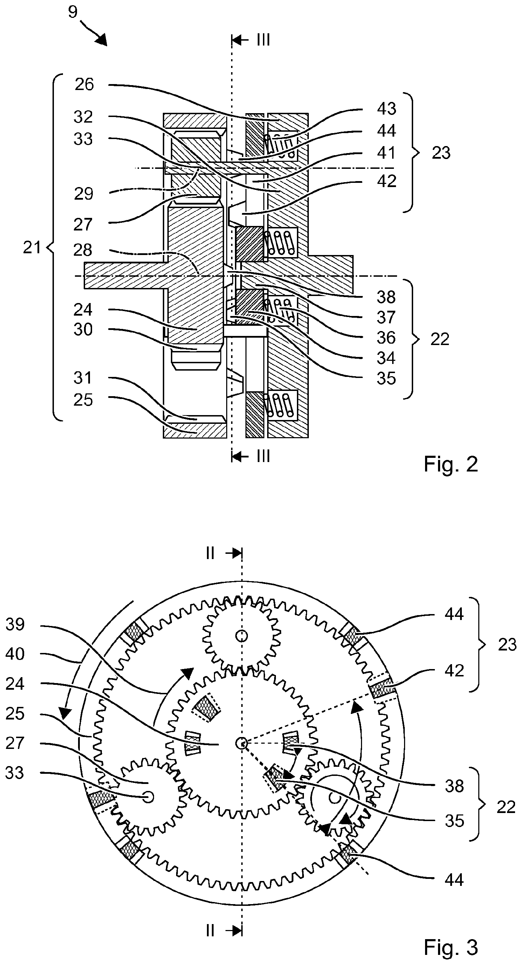

Eine bespielhafte Ausgestaltung des Getriebes **9** ist in Fig. 2 und Fig. 3 dargestellt. Das Getriebe **9** enthält eine Planetengetriebestufe **21**, eine erste Sperrkörperkupplung **22** und eine zweite Sperrkörperkupplung **23.**

Die Planetengetriebestufe **21** hat, wie auch sonst üblich, ein Sonnenrad **24,** ein Hohlrad **25** und einen Planetenträger **26**, wobei letzterer ein oder mehrere Planetenräder **27** trägt. Das Sonnenrad **24**, das Hohlrad **25** und der Planetenträger **26** sind um eine Getriebeachse **28** drehbar. Die Drehzahl und die Drehrichtung der drei Elemente sind gleich oder unterschiedlich, je nachdem, ob einzelne Elemente am Drehen durch ein von außen einwirkendes Drehmoment gehindert sind. Jedes der Planetenräder **27** rollt zugleich an dem äußeren Umfang des Sonnenrads **24** und auch an dem inneren Umfang des Hohlrads **25** ab. Jedes Planetenrad **27** hat eine eigene Planetenachse **29**, um welche sich das Planetenrad **27**, a priori unabhängig von dem Planetenträger **26**, drehen kann. Die Planetenachse **29** ist parallel und versetzt zu der Getriebeachse **28**. Die Planetenachse **29** ist an dem Planetenträger **26** fixiert, entsprechend ändert sich die Raumposition des Planetenachse **29** mit der Drehbewegung des Planetenträgers **26**. Die Bewegung der Planetenräder **27** ist aus einer Drehbewegung um die eigene Planetenachse **29** und einer Drehbewegung der Planetenachse **29** um die Getriebeachse **28** überlagert sein.

Die Planetengetriebestufe **21** ist beispielhaft mit dem Sonnenrad **24** antriebsseitig und dem Planetenträger **26** abtriebsseitig angeordnet. Das Drehmoment des Motors **7** liegt somit an dem Sonnenrad **24** und das Gegenmoment des Werkzeughalters **5** an dem Planetenträger **26** an. Das Hohlrad **25** ist frei gegenüber dem Motor **7,** dem Werkzeughalter **5** und dem Maschinengehäuse **10** drehbar. Der Planetenträger **26** ist weder mit dem Sonnenrad **24** noch mit dem Hohlrad **25** starr verbunden.

In der dargestellten Ausführung hat das Sonnenrad **24** eine Verzahnung **30** an seinem äußeren Umfang und das Hohlrad **25** eine Verzahnung **31** an seinem inneren Umfang. Die Planetenräder **27** sind als Zahnräder ausgebildet, welche mit den beiden Verzahnungen **30**, **31** kämmen. Der äußere Umfang des Sonnenrades **24** ist doppelt so lang wie der innere Umfang des Sonnenrads **24.**

Der Planetenträger **26** hat eine Grundplatte **32,** welche drehbar um die Getriebeachse **28** gelagert ist. Mehrere Zapfen **33** sind an der Grundplatte **32** befestigt. Die Zapfen **33** bilden die Planetenachsen **29**, die Planetenräder **27** sind auf den Zapfen **33** um die Planetenachsen **29** drehbar gelagert. Die Zapfen **33** sind in einem radialen Abstand parallel zu der Getriebeachse **28** und vorzugsweise in gleichen Winkelabständen um die Getriebeachse **28** angeordnet.

Das Getriebe **9** hat eine erste Sperrkörperkupplung **22**, die zwischen dem Planetenträger **26** und dem Sonnenrad **24** ausgebildet ist. Die beispielhafte erste Sperrkörperkupplung **22** basiert auf einem federbelasteten, axial beweglichen ersten Kupplungsring **34**, der in einer Grundstellung ein Drehmoment von dem Planetenträger **26** auf das Sonnenrad **24** mittels von Nocken **35** übermittelt. Überschreitet das anliegende Drehmoment ein von dem Kupplungsring **34** maximal übertragbares Drehmoment, wird der erste Kupplungsring **34** axial, gegen die Kraft einer Feder **36** in eine Freigabestellung verschoben. Der Kupplungsring **34** überträgt in der Freigabestellung kein Drehmoment, wodurch sich der Planetenträger **26** frei gegenüber dem Sonnenrad **24** drehen kann.

Bei der dargestellten Ausführungsform ist der axial bewegliche, erste Kupplungsring **34** auf dem Planetenträger **26** gelagert. Der Planetenträger **26** weist beispielsweise eine zu der Getriebeachse **28** parallele prismatische Säule **37** auf, auf die der Planetenträger **26** passgenau aufgesetzt ist. Ebene Schlüsselflächen an der Säule **37** verhindern ein Drehen des ersten Kupplungsrings **34** gegenüber dem Planetenträger **26.** Der Planetenträger **26** und der erste Kupplungsring **34** sind zwar gegeneinander axial verschieblich aber nicht drehbar. Ein oder mehrere Federn **36** sind zwischen den Planetenträger **26** und den ersten Kupplungsring **34** eingespannt, um den ersten Kupplungsring **34** in Richtung zu dem Sonnenrad **24** in die Grundstellung vorzuspannen. Der erste Kupplungsring **34** kann axial, gegen die Kraft der Federn **36** von dem Sonnenrad **24** weg in die Freigabestellung verschoben werden. Das Sonnenrad **24** hat an einer Stirnfläche mehrere zu den Nocken **35** des ersten Kupplungsrings **34** komplementäre (Gegen-) Nocken **38.** Die Nocken **35** und Gegennocken **38** sind in gleichem radialen Abstand zu der Getriebeachse **28.** Die Nocken **35** überlappen mit den Gegennocken **38** längs der Getriebeachse **28**, wenn der erste Kupplungsring **34** in der Grundstellung ist (Fig. 2), und die Nocken **35** sind längs der Getriebeachse **28** von den Gegennocken **38** beabstandet, wenn der erste Kupplungsring **34** in der Freigabestellung ist. Die in Drehrichtung **39** und entgegen der Drehrichtung **40** weisenden Stirnflächen der Nocken **35** und Gegennocken **38** sind gegenüber der Getriebeachse **28** geneigt. Die geneigten Stirnflächen erzeugen aus einem anliegenden Drehmoment eine axial gegen die Federn wirkende Kraft, um ab einem maximal zu übertragenden Drehmoment den ersten Kupplungsring **34** bis in die Freigabestellung auszulenken. Der erste Kupplungsring kann gleichermaßen axial beweglich auf dem Sonnenrad angeordnet sein. Entsprechend sind die Gegennocken an dem Planetenträger vorgesehen.

Das Getriebe **9** hat eine zweite Sperrkörperkupplung **23,** die zwischen dem Planetenträger **26** und dem Hohlrad **25** ausgebildet ist. Die Sperrkörperkupplung basiert auf einem federbelasteten, axial beweglichen zweiten Kupplungsring **41**, der in einer Grundstellung ein Drehmoment von dem Planetenträger **26** auf das Hohlrad **25** mittels von Nocken **42** übermittelt. Überschreitet das anliegende Drehmoment ein von dem Kupplungsring **41** maximal übertragbares Drehmoment, ist der zweite Kupplungsring **41** axial, gegen die Kraft einer Feder **43** in eine Freigabestellung verschoben. Der Kupplungsring **41** überträgt in der Freigabestellung kein Drehmoment, wodurch sich der Planetenträger **26** frei gegenüber dem Hohlrad **25** drehen kann.

Der Aufbau der beispielhaften zweiten Sperrkörperkupplung **23** ist analog zu der ersten Sperrkörperkupplung **23.** Der zweite Kupplungsring **41** ist axial beweglich auf dem Planetenträger **26** angeordnet. Ein oder mehrere Federn **43** spannen den zweiten Kupplungsring **41** in Richtung zu dem Hohlrad **25** in die Grundstellung vor. Der zweite Kupplungsring **41** kann axial, gegen die Kraft der Federn **43** in die Freigabestellung verschoben werden. An dem Hohlrad **25** sind mehrere (Gegen-) Nocken **44** vorgesehen, an welchen die Nocken **42** des zweiten Kupplungsrings **34** in und gegen die Drehrichtung **40** zum Anliegen kommen können. In der Grundstellung überlappen die Nocken **42** und die Gegennocken **44,** in der Freigabestellung sind die Nocken **42** und die Gegennocken **44** axial beabstandet. Die Stirnflächen der Nocken **42** und Gegennocken **44** sind derart geneigt, dass ein anliegendes Drehmoment eine gegen die Federn **43** wirkende Kraft auf den zweiten Kupplungsring **41** ausübt. Anstelle den zweiten Kupplungsring **41** auf dem Planetenträger **26** zu lagern, kann der zweite Kupplungsring **41** axial beweglich auf dem Hohlrad **25** angeordnet sein.

Das Getriebe **9** überträgt wie folgt ein Drehmoment von dem Sonnenrad **24** auf den Planetenträger **26.** Sofern das anliegende Drehmoment geringer als das von der ersten Sperrkörperkupplung **22** übertragbare Drehmoment ist, treibt das Sonnenrad **24** den Planetenträger **26** mittelbar durch die erste Sperrkörperkupplung **22** an. Drehzahl und Drehrichtung **39** von Sonnenrad **24** und Planetenträger **26** sind gleich. Mangels einer relativen Drehbewegung drehen sich die von dem Planetenträger **26** getragenen Planetenräder **27** nicht um die Planetenachse **29**, sondern nur um die Getriebeachse **28.** Das Hohlrad **25** wird durch die nicht-drehenden Planetenträger **26** in eine zu dem Planetenträger **26** synchrone Drehbewegung um die Getriebeachse **28** gezwungen. Letztlich dreht sich das gesamte Getriebe **9** wie eine Einheit um die Getriebeachse **28.**

Das zu übertragende Drehmoment übersteigt beispielsweise das maximal übertragbare Drehmoment der ersten Sperrkörperkupplung **22**, wenn der Werkzeughalter **5** blockiert ist. Der Planetenträger **26** kann sich nicht drehen, obwohl der Motor **7** weiterhin ein Drehmoment auf das Sonnenrad **24** ausübt. Für diesen Fall, wenn das an der ersten Sperrkörperkupplung **22** anliegende Drehmoment das maximal übertragbare Drehmoment überschreitet, öffnet die erste Sperrkörperkupplung **22.** Das Sonnenrad **24** dreht sich angetrieben durch den Motor **7** weiterhin in seiner Drehrichtung **39** und seiner Drehzahl. Der Planetenträger **26** steht oder hat zumindest eine deutlich gegenüber dem Planetenträger **26** reduzierte Drehzahl. Aus der relativen Drehbewegung zwischen dem Planetenträger **26** und dem Sonnenrad **24** resultiert eine Drehbewegung der Planetenräder **27** um deren Planetenachsen **29.** Das Hohlrad **25** ist durch die Planetenräder **27** angetrieben und bewegt sich in einem dem Sonnenrad **24** entgegengesetzter Drehrichtung **40.** Die Drehzahl des Hohlrads **25** ist geringer als die Drehzahl des Planetenträgers **26.** Das Untersetzungsverhältnis ist gleich dem Verhältnis des äußeren Umfangs des Sonnenrads **24** zu dem inneren Umfang des Hohlrads **25**, hier beispielsweise 1:2. Die relative Drehbewegung von Planetenträger **26** und Hohlrad **25** bewirkt, dass die Gegennocken **44** an dem Hohlrad **25** an den Nocken **42** des zweiten Kupplungsrings **41** zum Anliegen kommen. Die zweite Sperrkörperkupplung **23** ist im Eingriff. Soweit das anliegende Drehmoment größer als das maximal übertragbare Drehmoment ist, löst die zweite Sperrkörperkupplung **23** aus. Die dargestellte zweite Sperrkörperkupplung **23** hat ein geringeres maximal übertragbares Drehmoment verglichen zu dem maximal übertragbaren Drehmoment der ersten Sperrkörperkupplung **22.** Somit löst die zweite Sperrkörperkupplung **23** typischerweise aus, wenn zuvor die erste Sperrkörperkupplung **23** auslöste. Das Sonnenrad **24** dreht sich weiterhin gegenüber dem stehenden Planetenträger **26,** bis nun die erste Sperrkörperkupplung **22** erneut in Eingriff gelangt. Die Gegennocken **38** an dem Sonnenrad **24** kommen zum Anliegen an den Nocken **35** des ersten Kupplungsrings **34.** Der in diesem Abschnitt beschriebene Ablauf wiederholt sich zyklisch, bis das anliegende Drehmoment das maximal zulässige Drehmoment der ersten Sperrkörperkupplung **22** unterschreitet.

Wenn die erste Sperrkörperkupplung **22** und die zweiten Sperrkörperkupplung **23** jeweils in Eingriff gelangen, üben sie einen Schlag auf den Planetenträger **26** aus. Während der Schlag der ersten Sperrkörperkupplung **22** in der Drehrichtung **39** des Sonnenrads **24** erfolgt, erfolgt der Schlag der zweiten Sperrkörperkupplung **23** in der gegenläufigen Drehrichtung **40,** welche durch das Hohlrad **25** vorgegeben ist. Solange die beiden Sperrkörperkupplungen **22, 23** alternierend auslösen, erfährt der Planetenträger **26** und damit der Werkzeughalter **5** alternierende Drehschläge in und gegen den Uhrzeigersinn. Die Drehschläge können das Lösen eines blockierten Werkzeuges begünstigen.

Die erste Sperrkörperkupplung **22** hat eine Anzahl von Drehstellungen, in welchen die Nocken **35** an den Gegennocken **38** anliegen, d.h. ein Drehmoment übertragen können. Die Drehstellungen können beispielsweise als Drehwinkel des Sonnenrads **24** gegenüber dem stehenden Planetenträger **26** bestimmt werden, bei welchen der Eingriff erfolgt. Die Drehstellungen sind durch die Anzahl und Anordnung der Nocken **35** und Gegennocken **38** definiert. Die Nocken **35** sind vorzugsweise in gleichen Winkelabständen um die Getriebeachse **28** verteilt angeordnet; die Gegennocken **38** sind vorzugsweise in gleichen Winkelabständen um die Getriebeachse **28** angeordnet. Bei der beispielhaft dargestellten Ausführungsform mit zwei Nocken **35** sind diese im Abstand von 180 Grad angeordnet, gleiches für die Gegennocken **38.** Die beispielhafte erste Sperrkörperkupplung **22** hat genau zwei Drehstellungen, welche um 180 Grad zueinander versetzt sind.

Die zweite Sperrkörperkupplung **23** hat eine Anzahl von Drehstellungen, in welchen die Nocken **42** an den Gegennocken **44** anliegen, d.h. ein Drehmoment übertragen können. Die Drehstellungen können beispielsweise als Drehwinkel des Hohlrads **25** gegenüber dem stehenden Planetenträger **26** bestimmt werden, bei welchen der Eingriff erfolgt. Die Drehstellungen sind durch die Anzahl und Anordnung der Nocken **42** und Gegennocken **44** definiert. Die Nocken **42** sind vorzugsweise in gleichen Winkelabständen um die Getriebeachse **28** verteilt angeordnet; die Gegennocken **44** sind vorzugsweise in gleichen Winkelabständen um die Getriebeachse **28** angeordnet. Bei der beispielhaft dargestellten Ausführungsform mit zwei Nocken **42** sind diese im Abstand von 180 Grad angeordnet; und die vier Gegennocken **44** sind im Abstand von 90 Grad angeordnet. Die beispielhafte zweite Sperrkörperkupplung **22** hat genau vier Drehstellungen, welche um 90 Grad zueinander versetzt sind.

Die (erste) Anzahl von Drehstellungen der ersten Sperrkörperkupplung **22** kann geringer als die (zweite) Anzahl der Drehstellungen der zweiten Sperrkörperkupplung **23** gewählt sein. Vorzugsweise ist das Verhältnis der ersten Anzahl zu der zweiten Anzahl gleich dem Verhältnis des äußeren Umfangs des Sonnenrads **24** zu dem inneren Umfang des Hohlrads **25**, hier beispielsweise 1:2. Hierdurch wird das Untersetzungsverhältnis ausgeglichen. Die verglichen zu den Gegennocken **38** des Sonnenrads **24** nur halb so schnell drehenden Gegennocken **44** an dem Hohlrad **25** müssen sich nur halb so weit bewegen, bis sie an die zugehörigen Nocken **42** anschlagen, wie die Gegennocken **38** benötigen um an deren zugehörige Nocken **35** anzuschlagen. Das gewählte Verhältnis ermöglicht, dass die erste Sperrkörperkupplung **22** und die zweite Sperrkörperkupplung **23** streng alternierend in Eingriff gelangen. Das Verhältnis kann auch anders gewählt sein. Beispielsweise hat die zweite Sperrkörperkupplung **23** doppelt so viele Drehstellungen, hier acht. Das Getriebe **9** gelangt somit zyklisch einmal mit der ersten Sperrkörperkupplung **22** und zweimal mit der zweiten Sperrkörperkupplung **23** in Eingriff.

Die erste Sperrkörperkupplung **22** gelangt nur in Eingriff, wenn die zweite Sperrkörperkupplung **23** nicht in Eingriff ist, und vice versa. Die Bewegung der beiden Sperrkörperkupplungen **22, 23** sind an die Drehbewegung des Sonnenrads **24** gekoppelt. Die beispielhafte erste Sperrkörperkupplung **22** gelangt für jede 180 Grad, die sich das Sonnenrad **24** dreht in Eingriff. Die zweite Sperrkörperkupplung **23** gelangt für jede 90 Grad, die sich das Hohlrad **25** dreht in Eingriff. Damit sich das Hohlrad **25** um 90 Grad dreht, muss sich bei dem beispielhaften Untersetzungsverhältnis von 1:2 das Sonnenrad **24** um 180 Grad drehen. Die zweite Sperrkörperkupplung **23** kann gegenüber der ersten Sperrkörperkupplung **23** um einen Winkel versetzt angeordnet werden, so dass die beiden Sperrkörperkupplungen **22**, **23** niemals gleichzeitig in Eingriff sind. Beispielsweise greift die erste Sperrkörperkupplung **23** bei ganzen Vielfachen von 180 Grad des Sonnenrads **24** und die zweite Sperrkörperkupplung **23** um einen festen Winkel, z.B. 90 Grad, nach den ganzen Vielfachen von 180 Grad des Sonnenrads **24** ein. Vorzugsweise ist der Winkel halb so groß, wie der Winkel zwischen den aufeinanderfolgenden Drehstellungen der ersten Sperrkörperkupplung **22.**

Die Sperrkörperkupplungen **22**, **23** sind anhand von beispielhaften verzahnenden Nockenkupplungen beschrieben. Anstelle von Nocken können auch Kugeln, Hebel oder andere Sperrkörper **35** verwendet werden, welche abgestützt durch eine Feder in Taschen eingreifend ein Drehmoment übermitteln.

Das Sonnenrad **24,** das Hohlrad **25** und der Planetenträger **26** der dargestellten Ausführungsform sind axial fixiert. Die als Nocken **35** ausgebildeten Sperrkörper sind sowohl gegenüber dem Sonnenrad **24** und dem Planetenträger **26** axial beweglich. In einer Ausgestaltung sind das Sonnenrad und der Planetenträger relativ zueinander axial beweglich. Die Nocken und Gegennocken können unbeweglich auf dem Sonnenrad und dem Planetenträger fixiert sein. Analoges gilt für ein axial bewegliches Hohlrad.

Die Nocken **42** der zweiten Sperrkörperkupplung **23** greifen axial in die Gegennocken **42** ein. In einer Ausgestaltung überlappt der Planetenträger axial mit dem Hohlrad. Beispielsweise hat der Planetenträger einen rohrförmigen Vorsprung, in welchem das Hohlrad angeordnet ist. Die Nocken greifen radial in die Gegennocken ein. Die Nocken oder die Gegennocken werden durch eine radial wirkende Feder in Eingriff gehalten.

## Patentansprüche

1. Handwerkzeugmaschine (1) mit
einem Motor (7),
einem Werkzeughalter (5) zum Haltern eines drehenden Werkzeuges auf einer Arbeitsachse (3),
einer Planetengetriebestufe (21), deren Sonnenrad (24) oder deren Hohlrad (25) mit dem Motor (7) gekoppelt ist und deren Planetenträger (26) mit dem Werkzeughalter (5) gekoppelt ist, **gekennzeichnet durch** eine erste Sperrkörperkupplung (22), die das Sonnenrad (24) mit dem Planetenträger (26) koppelt, und eine zweite Sperrkörperkupplung (23), die das Hohlrad (25) mit dem Planetenträger (26) koppelt.

2. Handwerkzeugmaschine nach Anspruch 1, **dadurch gekennzeichnet, dass** alternativ das Sonnenrad (24) mit dem Motor (7) gekoppelt ist und das Hohlrad (25) frei um eine Getriebeachse (28) drehbar ist oder dass das Hohlrad (25) mit dem Motor (7) gekoppelt ist und das Sonnenrad (24) frei um eine Getriebeachse (28) drehbar ist

3. Handwerkzeugmaschine (1) nach Anspruch 1 oder 2, **dadurch gekennzeichnet, dass** die erste Sperrkörperkupplung (22) gegenüber der zweiten Sperrkörperkupplung (23) derart angeordnet ist, dass maximal eine der beiden Sperrkörperkupplung (22, 23) in Eingriff ist.

4. Handwerkzeugmaschine (1) nach einem der vorhergehenden Ansprüche, **dadurch gekennzeichnet, dass** die erste Sperrkörperkupplung (22) eine erste Anzahl von Drehstellungen aufweist, in welchen die erste Sperrkörperkupplung (22) in Eingriff ist, die zweite Sperrkörperkupplung (23) eine zweite Anzahl von Drehstellungen aufweist, in welchen die zweite Sperrkörperkupplung in Eingriff ist, und das Verhältnis der ersten Anzahl zu der zweiten Anzahl gleich dem Verhältnis des äußeren Umfangs des Sonnenrads (24) zu dem inneren Umfangs des Hohlrads (25) ist.

5. Handwerkzeugmaschine (1) nach einem der vorhergehenden Ansprüche, **dadurch gekennzeichnet, dass** die erste Sperrkörperkupplung (22) axial auslösend und/oder die zweite Sperrkörperkupplung (23) axial auslösend ist.

6. Handwerkzeugmaschine (1) nach einem der vorhergehenden Ansprüche, **dadurch gekennzeichnet, dass** die erste Sperrkörperkupplung (22) ein oder mehrere Sperrkörper (35) aufweist, die aus einer Grundstellung zum Ankoppeln des Planetenträgers (26) an das Sonnenrad (24) in eine Freigabestellung zum Abkoppeln des Planetenträgers (26) von dem Sonnenrad (24) gegen die Kraft ein oder mehrerer Federn (36) verschiebbar sind.

7. Handwerkzeugmaschine (1) nach einem der vorhergehenden Ansprüche, **dadurch gekennzeichnet, dass** die zweite Sperrkörperkupplung (23) ein oder mehrere Sperrkörper (42) aufweist, die aus einer Grundstellung zum Ankoppeln des Planetenträgers (26) an das Hohlrad (25) in eine Freigabestellung zum Abkoppeln des Planetenträgers (26) von dem Hohlrad (25) gegen die Kraft ein oder mehrerer Federn (43) verschiebbar sind.

## Claims

1. Hand-held power tool (1), comprising
a motor (7),
a tool holder (5) for clamping a rotating tool on a working axis (3),
a planetary gear stage (21), of which the sun wheel (24) or the ring gear (25) is coupled to the motor (7) and the planet carrier (26) is coupled to the tool holder (5),
**characterised by**
a first blocking body coupling (22) which couples the sun wheel (24) to the planet carrier (26), and
a second blocking body coupling (23) which couples the ring gear (25) to the planet carrier (26).

2. Hand-held power tool according to Claim 1, **characterised in that**, alternatively, the sun wheel (24) is coupled to the motor (7) and the ring gear (25) is freely rotatable about a transmission axis (28), or **in that** the ring gear (25) is coupled to the motor (7) and the sun wheel (24) is freely rotatable about a transmission axis (28).

3. Hand-held power tool according to Claim 1 or 2, **characterised in that** the first blocking body coupling (22) is arranged with respect to the second blocking body coupling (23) in such a way that not more than one of the two blocking body couplings (22, 23) is in engagement.

4. Hand-held power tool (1) according to any one of the preceding claims, **characterised in that** the first blocking body coupling (22) has a first number of rotational positions in which the first blocking body coupling (22) is in engagement, the second blocking body coupling (23) has a second number of rotational positions in which the second blocking body coupling is in engagement, and the ratio of the first number to the second number is equal to the ratio of the outer circumference of the sun wheel (24) to the inner circumference of the ring gear (25).

5. Hand-held power tool (1) according to any one of the preceding claims, **characterised in that** the first blocking body coupling (22) disengages axially and/or the second blocking body coupling (23) disengages axially.

6. Hand-held power tool (1) according to any one of the preceding claims, **characterised in that** the first blocking body coupling (22) has one or more blocking bodies (35) which are displaceable from a normal position for coupling the planet carrier (26) to the sun wheel (24) to a release position for uncoupling the planet carrier (26) from the sun wheel (24) against the force of one or more springs (36).

7. Hand-held power tool (1) according to any one of the preceding claims, **characterised in that** the second blocking body coupling (23) has one or more blocking bodies (42) which are displaceable from a normal position for coupling the planet carrier (26) to the ring gear (25) to a release position for uncoupling the planet carrier (26) from the ring gear (25) against the force of one or more springs (43).

## Revendications

1. Machine-outil manuelle (1) comportant :
un moteur (7),
un porte-outil (5) pour maintenir un outil en rotation sur un axe de travail (3),
un étage d'engrenage planétaire (21) dont la roue solaire (24) ou la couronne (25) est couplée au moteur (7) et dont le porte-satellites (26) est couplé au porte-outil (5),
**caractérisée par** un premier accouplement d'organes de blocage (22) qui couple la roue solaire (24) et le porte-satellites (26), et un second accouplement d'organes de blocage (23) qui couple la couronne (25) et le porte-satellites (26).

2. Machine-outil manuelle (1) selon la revendication 1, **caractérisée en ce que**, en alternance, la roue solaire (24) est accouplée au moteur (7) et la couronne (25) peut tourner librement autour d'un axe d'engrenage (28), ou **en ce que** la couronne (25) est accouplée au moteur (7) et la roue solaire (24) peut tourner librement autour d'un axe d'engrenage (28).

3. Machine-outil manuelle (1) selon la revendication 1 ou 2, **caractérisée en ce que** le premier accouplement d'organes de blocage (22) est agencé par rapport au second accouplement d'organes de blocage (23) de telle sorte qu'au maximum un des deux accouplements d'organes de blocage (22, 23) est en prise.

4. Machine-outil manuelle (1) selon l'une des revendications précédentes, **caractérisée en ce que** le premier accouplement d'organes de blocage (22) comporte un premier nombre de positions de rotation, dans lesquelles le premier accouplement d'organes de blocage (22) est en prise, le second accouplement d'organes de blocage (23) comporte un second nombre de positions de rotation, dans lesquelles le second accouplement d'organes de blocage est en prise, et le rapport entre le premier nombre et le second nombre est égal au rapport de la circonférence extérieure de la roue solaire (24) sur la circonférence intérieure de la couronne (25).

5. Machine-outil manuelle (1) selon l'une des revendications précédentes, **caractérisée en ce que** le premier accouplement d'organes de blocage (22) peut se déclencher axialement et/ou le second accouplement d'organes de blocage (23) peut se déclencher axialement.

6. Machine-outil manuelle (1) selon l'une des revendications précédentes, **caractérisée en ce que** le premier accouplement d'organes de blocage (22) comporte un ou plusieurs organes de blocage (35) qui peuvent se déplacer à l'encontre de la force d'un ou plusieurs ressorts (36) depuis une position de départ pour accoupler le porte-satellites (26) à la roue solaire (24) jusqu'à une position de libération pour désaccoupler le porte-satellites (26) de la roue solaire (24).

7. Machine-outil manuelle (1) selon l'une des revendications précédentes, **caractérisée en ce que** le second accouplement d'organes de blocage (23) comporte un ou plusieurs organes de blocage (42) qui peuvent se déplacer à l'encontre de la force d'un ou plusieurs ressorts (43) depuis une position de départ pour accoupler le porte-satellites (26) et la couronne (25) jusqu'à une position de libération pour désaccoupler le porte-satellites (26) et la couronne (25).
